## Europäisches Patentamt

## European Patent Office

## Office européen des brevets

(19)

(11) Veröffentlichungsnummer: **0 276 747**
**B1**

(12) **EUROPÄISCHE PATENTSCHRIFT**

(45) Veröffentlichungstag der Patentschrift:
09.05.90

(21) Anmeldenummer: **88100787.6**

(22) Anmeldetag: **20.01.88**

(51) Int. Cl.⁵: **F16D 65/56**

(54) Bremsbackenbaupgruppe für eine selbstättig nachstellbare Innenbacken-Trommelbremse.

(30) Priorität: **29.01.87 DE 8701409 U**

(43) Veröffentlichungstag der Anmeldung:
**03.08.88 Patentblatt 88/31**

(45) Bekanntmachung des Hinweises auf die Patenterteilung:
**09.05.90 Patentblatt 90/19**

(84) Benannte Vertragsstaaten:
**DE ES FR GB IT**

(56) Entgegenhaltungen:
**DE-A- 2 030 231**
**DE-A- 3 036 231**
**FR-A- 1 544 028**
**GB-A- 1 032 348**
**GB-A- 2 003 239**
**US-A- 2 762 463**

(73) Patentinhaber: **LUCAS INDUSTRIES public limited company, Great King Street, Birmingham, B19 2XF West Midlands(GB)**

(72) Erfinder: **Brix, Hermann, Heidestrasse 39, D-5407 Boppard 4(DE)**

(74) Vertreter: **Goetz, Rupert, Dipl.-Ing. et al, Wuesthoff & Wuesthoff Patent- und Rechtsanwälte Schweigerstrasse 2, D-8000 München 90(DE)**

## Beschreibung

Die Erfindung betrifft eine Bremsbackenbaugruppe für eine selbsttätig nachstellbare Innenbacken-Trommelbremse, mit
— einer Bremsbacke, die einen bogenförmigen Bremsbackenflansch mit außen befestigtem Bremsbelag und einen Bremsbackensteg mit einem seitlich angenieteten Zapfen aufweist,
— einer Nachstellklinke, die auf dem Zapfen schwenkbar gelagert ist, und
— einer Feder, die mit ihrem schraubenförmig gewundenen Mittelteil den Zapfen umschlingt, mit einem ersten Federarm innen am Bremsbackenflansch anliegt und mit einem zweiten Federarm die Nachstellklinke vorspannt,
— wobei Nachstellklinke und Feder durch einen Kopf des Zapfens unverlierbar mit der Bremsbacke verbunden sind und die Nachstellklinke in einer Ruhelage durch den zweiten Federarm ebenfalls innen am Bremsbackenflansch anliegend gehalten ist.

Bei einer bekannten Bremsbackenbaugruppe dieser Gattung (US-A 2 762 463) hat die Nachstellklinke einen langen Arm, der erheblich über ein Ende der zugehörigen Bremsbacke hinausragt und einen Vorsprung aufweist, der in der Ruhelage der Nachstellklinke innen am Bremsbackenflansch anliegt. Diese Ruhelage der Nachstellklinke ist unabhängig davon, ob die Bremsbacke in eine Bremse eingebaut ist oder nicht.

Es ist üblich, daß vier Bremsbacken für die beiden Bremsen an einer Achse eines Kraftfahrzeugs in einem Folienbeutel verpackt auf Lager gehalten und nicht nur an Fachwerkstätten verkauft werden, sondern auch an nicht ausgebildete Autofahrer, die Bremsbacken mit abgenutzten Reibbelägen selber gegen neue Bremsbacken auswechseln. Bei unsachgemäßer Lagerung oder Handhabung einer solchen Ersatzteilpackung oder der einzelnen Bremsbacken kann es leicht vorkommen, daß die meist aus dünnem Blech bestehenden Nachstellklinken verbogen und beim Einbau nicht wieder zurechtgebogen werden, was regelmäßig zur Folge hat, daß die Nachstellvorrichtung im Betrieb überhaupt nicht oder nicht in der gewünschten Weise arbeitet. Die betroffenen Bremsen können dadurch letzten Endes ausfallen.

Der Erfindung liegt deshalb die Aufgabe zugrunde, eine Bremsbacke für eine selbsttätig nachstellbare Innenbacken-Trommelbremse derart weiterzubilden, daß ihre Nachstellklinke während der Lagerung, des Transports und des Einbaus der Bremsbackenbaugruppe weitgehend gegen Beschädigungen geschützt ist.

Die Aufgabe ist erfindungsgemäß mit einer Bremsbackenbaugruppe der eingangs beschriebenen Art gelöst, bei der die die Nachstellklinke in ihrer Ruhelage vor dem Einbau der Bremsbacke in eine Bremse durch die Feder vollständig innerhalb des Umrisses des Bremsbackenstegs gehalten wird.

Damit ist eine wichtige Voraussetzung dafür erfüllt, daß erfindungsgemäße Bremsbackenbaugruppen von ungeschulten Kräften verpackt, auf Lager gehalten, gehandelt und eingebaut werden können, ohne daß eine Beschädigung der empfindlichen Nachstellklinke zu befürchten ist.

Zweckmäßigerweise ist das Mittelteil der Feder in der Art einer Druckfeder unter axialer Vorspannung gehalten. Dies läßt sich einfach dadurch erreichen, daß die Länge des Zapfens zwischen dem Kopf und der im gegenüberliegenden Fläche des Bremsbackensteges geringer ist als die Summe aus der Dicke der Federklinke in dem Bereich, in dem diese auf den Zapfen aufgesteckt ist, und der axialen Länge des schraubenförmig gewundenen Mittelteils der Feder vor deren Einbau. Beim Vernieten des Zapfens entsteht dann im schraubenförmig gewundenen Mittelteil der Feder eine axiale Vorspannung, die jegliches Klappern der Feder und der Nachstellklinke verhindert.

Schließlich ist es vorteilhaft, wenn die Nachstellklinke zur Abstützung einer Nachstellstrebe eine in bezug auf den Zapfen radiale Abstützkante aufweist, die sich vor dem Einbau der Bremsbacke in eine Bremse ungefähr radial zum Bremsbackenflansch in Richtung zu dessen Krümmungsmittelpunkt erstreckt und sich in Einbaulage ungefähr parallel zur Verbindungslinie zweier Abstützenden der Bremsbacke erstreckt.

Ein Ausführungsbeispiel der Erfindung wird im folgenden anhand einer schematischen Zeichnung mit weiteren Einzelheiten beschrieben:

Fig. 1 ist eine perspektivische Darstellung einer Bremsbackenbaugruppe vor deren Einbau;

Fig. 2 ist eine entsprechende Darstellung der Bremsbackenbaugruppe mit Einzelteilen in einer Stellung, die sie beim Einbau in eine Trommelbremse einnehmen.

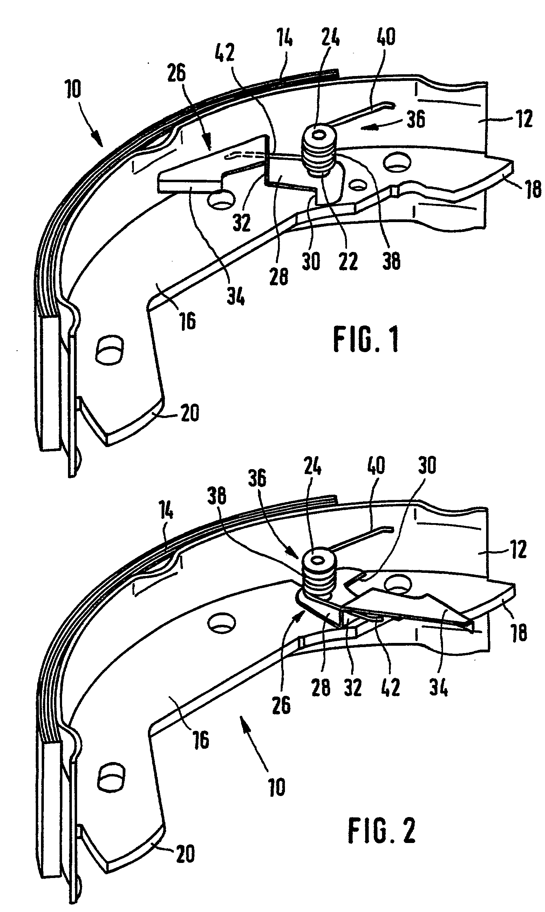

In Fig. 1 und 2 ist eine Bremsbacke 10 von üblicher Bauart dargestellt, wie sie beispielsweise in der DE-PS 2 508 614 dargestellt und beschrieben ist. Die Bremsbacke 10 hat einen bogenförmigen Bremsbackenflansch 12, an dessen Außenseite ein Bremsbelag 14 aufgeklebt und an dessen Innenseite ein Bremsbackensteg 16 angeschweißt ist. Der Bremsbackensteg 16 hat zwei ballige Abstützenden 18 und 20 zur Abstützung an einer hydraulischen Bremsbetätigungsvorrichtung bzw. an einem Widerlager der zugehörigen Trommelbremse.

Am Bremsbackensteg 16 ist in der Nähe des Abstützendes 18 ein hohler Zapfen 22 angenietet, der einen ebenfalls durch Nieten ausgebildeten Kopf 24 aufweist. Auf dem Zapfen 22 ist eine Nachstellklinke 26 gelagert, die ebenfalls von grundsätzlich bekannter Bauart ist, weshalb auch insoweit zur näheren Erläuterung auf die DE-PS 2 508 614 verwiesen werden kann. Die Nachstellklinke 26 hat einen radial inneren Abschnitt 28, an dem eine in bezug auf den Zapfen 22 radiale Abstützkante 30 zur Abstützung einer Nachstellstrebe ausgebildet ist.

Die Nachstellstrebe ist ebenfalls nicht abgebildet, da auch sie von bekannter, beispielsweise in der DE-PS 2 508 614 beschriebener, Bauart sein kann, beispielsweise eine Nachstellstrebe mit zwei ineinander geschraubten Gewindeteilen, die sich durch schrittweises Drehen eines der Gewindeteile längen läßt.

Der radial innere Abschnitt 28 der Nachstellklinke 26 ist durch eine Abkantung 32 mit einem radial äußeren Abschnitt 34 verbunden, der zum Eingreifen in ein außen verzahntes Mutterteil der Nachstellstrebe ausgebildet ist.

Auf dem Zapfen 22 ist, zwischen dessen Kopf 24 und dem radial inneren Abschnitt 28 der Nachstellklinke 26, eine Feder 36 mit einem schraubenartig gewundenen Mittelteil 38 schwenkbar gelagert. Das Mittelteil 38 ist axial vorgespannt, so daß es den radial inneren Abschnitt 28 der Nachstellklinke 26 am Bremsbackensteg 16 anliegend hält und dadurch am Klappern hindert.

Vom Mittelteil 38 erstrecken sich zwei Federarme 40 und 42 weg, die an ihren Enden leicht abgebogen sind. Der Federarm 40 stützt sich an der vom Bremsbelag 14 abgewandten, inneren Seite des Bremsbackenflansches 12 ab; der Federarm 42 erstreckt sich hingegen durch die an der Nachstellklinke 26 ausgebildete Abkantung 32 hindurch, die zu diesem Zweck eine Aussparung aufweist.

Die Feder 36 ist, zusätzlich zur axialen Vorspannung ihres Mittelteils 38, auch durch das Zusammenwirken der Federarme 40 und 42 mit dem Bremsbackensteg 16 bzw. der Nachstellklinke 26 vorgespannt und wirkt insoweit als Drehfeder. Sie ist dadurch bestrebt, die Nachstellklinke 26 in ihrer in Fig. 1 abgebildeten Ruhestellung zu halten, in der ihr radial äußerer Abschnitt 34 mit Vorspannung an der Innenseite des Bremsbackenflansches 12 anliegt.

Die Nachstellklinke 26 ist so gestaltet, daß sie in ihrer Ruhelage gemäß Fig. 1 nirgends über den Umriß des Bremsbackensteges 16 hinausragt und dadurch im Winkel zwischen diesem und dem Bremsbackenflansch 12 raumsparend und geschützt angeordnet ist.

Beim Einbau der Bremsbackenanordnung in eine Trommelbremse läßt sich die Nachstellklinke 26 gemäß Fig. 2 gegen den Widerstand der Feder 36 derart schwenken, daß ihre Abstützkante 30 sich ungefähr parallel zu einer gedachten Verbindungslinie der beiden Abstützenden 18 und 20 erstreckt. In dieser Einbaulage wird die Nachstellklinke 26 durch die zugehörige Nachstellstrebe gehalten.

## Patentansprüche

1. Bremsbackenbaugruppe für eine selbsttätig nachstellbare Innenbacken-Trommelbremse, mit
   - einer Bremsbacke (10), die einen bogenförmigen Bremsbackenflansch (12) mit außen befestigtem Bremsbelag (14) und einen Bremsbackensteg (16) mit einem seitlich angenieteten Zapfen (22) aufweist,
   - einer Nachstellklinke (26), die auf dem Zapfen (22) schwenkbar gelagert ist, und
   - einer Feder (36), die mit ihrem schraubenförmig gewundenen Mittelteil (38) den Zapfen (22) umschlingt, mit einem ersten Federarm (40) innen am Bremsbackenflansch (12) anliegt und mit einem zweiten Federarm (42) die Nachstellklinke (26) vorspannt,
   - wobei Nachstellklinke (26) und Feder (36) durch einen Kopf (24) des Zapfens (22) unverlierbar mit der Bremsbacke (10) verbunden sind und die Nachstellklinke (26) in einer Ruhelage durch den zweiten Federarm (42) ebenfalls innen am Bremsbackenflansch (12) anliegend gehalten ist, dadurch gekennzeichnet, daß die Nachstellklinke (26) in ihrer Ruhelage vor dem Einbau der Bremsbacke (10) in eine Bremse durch die Feder (36) vollständig innerhalb des Umrisses des Bremsbackenstegs (16) gehalten wird.

2. Bremsbackenbaugruppe nach Anspruch 1, dadurch gekennzeichnet, daß das Mittelteil (38) der Feder (36) in der Art einer Druckfeder unter axialer Vorspannung gehalten ist.

3. Bremsbackenbaugruppe nach Anspruch 1 oder 2, dadurch gekennzeichnet, daß die Nachstellklinke (26) zur Abstützung einer Nachstellstrebe eine in bezug auf den Zapfen (22) radiale Abstützkante (30) aufweist, die sich vor dem Einbau der Bremsbacke (10) in eine Bremse ungefähr radial zum Bremsbackenflansch (12) in Richtung zu dessen Krümmungsmittelpunkt erstreckt und sich in Einbaulage ungefähr parallel zur Verbindungslinie zweier Abstützenden (18, 20) der Bremsbacke (10) erstreckt.

## Revendications

1. Ensemble de mâchoires de frein pour un frein à tambour à mâchoire interne autoréglable, avec
   - une mâchoire de frein (10) qui présente une bride (12) de mâchoire de frein, en forme d'arc, portant une garniture de frein (14) fixée extérieurement, et une entretoise (16) de mâchoire de frein comportant un tenon rivé latéralement (22),
   - un cliquet de réglage (26), qui est logé en pivotement sur le tenon (22), et
   - un ressort (36), qui est enroulé autour du tenon (22) par sa partie médiane en hélice (38), repose intérieurement sur la mâchoire (10) de frein par une première branche (40) de ressort et sollicité élastiquement, par une deuxième branche (42) de ressort, le cliquet (26) de réglage,
   - le cliquet de réglage (26) et le ressort (36) étant reliés à la mâchoire de frein (10) de manière imperdable par une tête (24) du tenon (22), et le cliquet de réglage (26), dans la position de repos, étant également maintenu en appui intérieurement sur la bride (12) de mâchoire de frein par la deuxième branche de ressort (42),
   caractérisé en ce que le cliquet (26) de réglage, dans sa position de repos avant le montage de la mâchoire de frein (10) dans un frein, est maintenu par le ressort (36) complètement à l'intérieur du contour de l'entretoise (16) de mâchoire de frein.

2. Ensemble de mâchoires de frein selon la revendication 1, caractérisé en ce que la partie centrale (38) du ressort (36) est maintenue en sollicitation axiale à la manière d'un ressort de compression.

3. Ensemble de mâchoires de frein selon la revendication 1 ou 2, caractérisé en ce que le cliquet (26) de réglage présente, en vue de l'appui d'une tige de réglage, une arête d'appui (30) radiale par rapport au tenon (22) qui, avant le montage de la mâchoire de frein (10) dans un frein, s'étend a peu près radialement par rapport à la bride (12) de mâchoire de frein en direction du point central de courbure de cette bride et qui, dans la position montée, s'étend à peu près parallèlement à la ligne de liaison de deux extrémités d'appui (18, 20) de la mâchoire de frein (10).

**Claims**

1. Brake shoe assembly for an automatically adjustable internal shoe drum brake, comprising
   - a brake shoe (10) comprising an arcuate brake shoe flange (12) having an externally secured brake lining (14) and a brake shoe web (16) having a laterally riveted-on pin (22),
   - an adjusting pawl (26) which is pivotally mounted on the pin (22), and
   - a spring (36) which with its helically wound middle portion (38) embraces the pin (22), bears with a first spring arm (40) internally on the brake shoe flange (12) and with a second spring arm (42) biases the adjusting pawl (26),
   - the adjusting pawl (26) and spring (36) being connected by a head (24) of the pin (22) undetachably to the brake shoe (10) and the adjusting pawl (26) being held in a rest position by the second spring arm (42) likewise in internal engagement with the brake shoe flange (12),
   characterized in that the adjusting pawl (26) in its rest position before installation of the brake shoe (10) into a brake is held by the spring (36) completely within the contour of the brake shoe web (16).
2. Brake shoe assembly according to claim 1, characterized in that the middle portion (38) of the spring (36) is held under axial bias in the manner of a pressure spring.
3. Brake shoe assembly according to claim 1 or 2, characterized in that the adjusting pawl (26), for supporting an adjusting strut, has a support edge (30) which is radial with respect to the pin (22) and which prior to installation of the brake shoe (10) into a brake extends substantially radially to the brake shoe flange (12) in the direction towards the centre of curvature thereof and in the installation position extends substantially parallel to the line connecting two support ends (18, 20) of the brake shoe (10).

FIG. 1

FIG. 2